# EUROPÄISCHE PATENTSCHRIFT

(11) **EP 4 350 078 B1**
(45) Veröffentlichungstag und Bekanntmachung des Hinweises auf die Patenterteilung: **10.06.2026**
(21) Anmeldenummer: 22199996.4
(22) Anmeldetag: 06.10.2022
(51) Int. Cl.: E02D 7/00, E21B 7/00, E21B 41/00, E02F 9/26, E02D 13/06, E02D 17/13, E21B 7/02

(54) **TIEFBAUMASCHINE UND VERFAHREN ZUM BETREIBEN EINER TIEFBAUMASCHINE**
CIVIL ENGINEERING MACHINE AND METHOD FOR OPERATING A CIVIL ENGINEERING MACHINE
ENGIN DE GÉNIE CIVIL ET PROCÉDÉ DE FONCTIONNEMENT D'UN ENGIN DE GÉNIE CIVIL

(43) Veröffentlichungstag der Anmeldung: 10.04.2024
(73) Patentinhaber: BAUER Maschinen GmbH, 86529 Schrobenhausen (DE)
(72) Erfinder: Brüderle, Peter, 85123 Karlskorn (DE); Schober, Andreas, 86637 Wertingen (DE)
(74) Vertreter: Wunderlich & Heim Patentanwälte PartG mbB

(56) Entgegenhaltungen:
- EP-A1- 1 808 533
- WO-A1-2019/197219
- DE-A1- 102016 011 354
- DE-T5- 112020 000 195
- GB-A- 2 576 901
- JP-A- 2021 067 174

## Beschreibung

Die Erfindung betrifft eine Tiefbaumaschine, insbesondere Bohrgerät, mit einem mobilen Trägergerät, einem Mast oder Auslegerarm, welcher an dem Trägergerät angeordnet ist, einem Tiefbauwerkzeug, welches zum Ausführen einer Tiefbaumaßnahme an dem Mast beziehungsweise dem Auslegerarm verstellbar angeordnet ist, mindestens einer Anzeigeeinrichtung, insbesondere einem Monitor, und einer Steuereinheit, welche ausgebildet ist, Komponenten der Tiefbaumaschine zu steuern und Betriebszustände zu erfassen und abhängig von erfassten Betriebsdaten eine zumindest schematische Darstellung zumindest eines Teils der Tiefbaumaschine zu erzeugen und mit der mindestens einen Anzeigeeinrichtung anzuzeigen, wobei eine Lageänderung des Tiefbauwerkzeuges und/oder mindestens einer Komponente der Tiefbaumaschine in der zumindest schematischen Darstellung der einen Anzeigeeinrichtung angezeigt wird, gemäß dem Oberbegriff des Anspruchs 1.

Die Erfindung betrifft weiterhin ein Verfahren zum Betreiben einer solchen Tiefbaumaschine nach dem Oberbegriff des Anspruchs 14.

Bei der Tiefbaumaschine kann es sich beispielsweise um eine Schlitzwandfräse, eine Ramme, einen Seilbagger, einen Greiferbagger, aber auch um einen Mobilkran beziehungsweise einen mobilen Auslegerkran handeln.

Tiefbaumaschinen insbesondere zum Erstellen von Gründungen im Boden sind seit langem bekannt. Ein Gründungselement kann dabei beispielsweise durch Erstellen eines Loches im Boden, etwa eines Bohrloches oder eines Frässchlitzes, gebildet werden, wobei das Loch anschließend zum Bilden eines Gründungspfahles oder eines Schlitzwandsegmentes gegebenenfalls mit einer zusätzlichen Armierung mit einem aushärtbaren Medium, insbesondere einem Zement, verfüllt wird. Ein Gründungselement kann auch durch Einrammen oder Einrütteln, etwa eines Gründungspfahles oder einer Bohle erstellt werden. Ein Gründungselement ist dabei nicht auf eine Lastaufnahme oder eine Tragfähigkeitsfunktion beschränkt, sondern kann alternativ oder ergänzend auch eine Dichtfunktion und oder andere Aufgaben übernehmen, wie es etwa bei Baugrubenumschließungen mit Dichtwänden aus dem Spezialtiefbau bekannt ist.

Bekannte Tiefbaumaschinen sind heutzutage mit elektronischen Steuereinheiten versehen, welche den Betrieb der Tiefbaumaschine für einen Maschinenbediener erleichtern oder sogar teilweise oder vollautomatisch übernehmen können. Über Sensoren können verschiedene Betriebsdaten erfasst und der Steuereinheit zugeleitet werden. Über entsprechende Datenleitungen können Steuerbefehle an entsprechende Aktoren, insbesondere Antriebe und Stellzylinder, ausgegeben werden.

Derartige Tiefbaumaschinen sind beispielsweise aus der EP 3299523 A1, der EP 3296467 A1 bekannt.

Anzeigeeinrichtungen in Tiefbaumaschinen dienen dazu, Betriebsdaten, die von der Steuereinheit von internen und/oder externen Sensoren erfasst werden, dem Maschinenbediener anzuzeigen, so dass er die Tiefbaumaschine entsprechend effektiv und sicher steuern kann. Bei den Daten kann es sich beispielsweise um die aktuelle Tiefe des Tiefbauwerkzeuges, um ein Drehmoment einer Winde oder auch um eine Temperatur des Öls in einem Ölkreislaufs handeln.

Abhängig von der Maschinenausstattung und/oder einem durchzuführenden Arbeitsverfahren müssen eine Vielzahl von Daten einem Maschinenbediener angezeigt und visualisiert werden, um zuverlässig und effizient ein Gründungselement erstellen zu können.

Es besteht das Problem, dass der Maschinenbediener durch eine Datenflut von denjenigen Daten abgelenkt wird, welche für einen anstehenden Verfahrensschritt wesentlich sein können.

Aus der EP 1 808 533 ist ein baggerähnliches Minenräumgerät bekannt, welches dem Maschinenführer einen einfacheren Überblick seiner Maschine im Verhältnis zur zu bearbeitenden Fläche mittels einer adaptiven Bildschirmdarstellung ermöglicht. Die DE 11 2020 000 195 ermöglicht bei einem Bagger mit auswechselbaren Anbauwerkzeugen die vereinfachte Eingabe von Betriebsparametern über eine adaptive Menüsteuerung, in der ein Baggermodell dargestellt wird, welches dem realen Bagger nahekommt. Über einen Touchscreen kann der Bediener intuitiv bei Berührung der entsprechenden, auf dem Touchscreen dargestellten Teil des Baggermodells die Eingabe von benötigten Daten durchführen.

Der Erfindung liegt die **Aufgabe** zugrunde, eine Tiefbaumaschine sowie ein Verfahren zum Betreiben einer Tiefbaumaschine anzugeben, welche eine besonders effiziente Nutzung einer Tiefbaumaschine durch den Maschinenbediener ermöglichen.

Diese Aufgabe wird zum einen durch eine Tiefbaumaschine mit den Merkmalen des Anspruchs 1 und zum anderen durch ein Verfahren mit den Merkmalen des Anspruchs 14 gelöst.

Bevorzugte Ausführungsformen der Erfindung sind in den abhängigen Ansprüchen sowie in den Figuren und deren Beschreibung angegeben.

Die erfindungsgemäße Tiefbaumaschine ist dadurch gekennzeichnet, dass die Steuereinheit ausgebildet ist, bei bestimmten Lageänderungen des Tiefbauwerkzeugs und/oder von mindestens einer Komponente der Tiefbaumaschine automatisch einen Darstellungsmaßstab und/oder eine Darstellungsart der zumindest einen schematischen Darstellung der Anzeigeeinrichtung zu ändern.

Eine Grundidee der Erfindung besteht darin, dass die Steuereinheit ausgebildet ist, automatisch bei bestimmten Lageänderungen des Tiefbauwerkzeugs und/oder von zumindest einer Komponente der Tiefbaumaschine den Darstellungsmaßstab und/oder eine Darstellungsart der zumindest schematischen Darstellung der Anzeigeeinrichtung zu ändern. So kann beispielsweise bei Beginn der eigentlichen Bodenbearbeitung das Bodenbearbeitungswerkzeug in der zumindest schematischen Darstellung vergrößert angezeigt werden. Durch diese automatische Änderung in der Darstellung wird dem Maschinenbediener verdeutlicht, dass die Bearbeitung des Bodens ansteht und seine Aufmerksamkeit hierauf konzentriert wird. Dies fördert einen effizienten Arbeitsablauf und wirkt Fehlbedienungen entgegen.

Die Darstellung kann in sehr schematischer Weise erfolgen, wobei die Tiefbaumaschine und/oder das Bodenbearbeitungswerkzeug stark vereinfacht dargestellt sind. Dies reduziert notwendige Rechenleistungen, Speicherplatz sowie einen Programmieraufwand. Allerdings kann auch teilweise oder insgesamt eine realitätsnahe Darstellung erfolgen, wenn entsprechende Rechenleistung und Speicherplatz zur Verfügung stehen.

Eine bevorzugte Ausführungsform der Erfindung besteht darin, dass die Darstellungsart eine Darstellungsperspektive und/oder einen Darstellungsausschnitt und/oder Teildarstellungen und/oder eine Teiltransparente Darstellung umfasst. Die Darstellungsperspektive kann insbesondere eine Seitenansicht, eine Draufsicht, also eine Darstellung aus einer Vogelperspektive, oder eine perspektivische Ansicht sein.

So kann etwa bei der eigentlichen Bodenbearbeitung eine Seitenansicht auf das Werkzeug mit der Darstellung eines Bohrlochgrundes erfolgen, während etwa bei einem Entleeren des Werkzeuges an der Bodenoberfläche oder bei einem Verfahren der Tiefbaumaschine eine perspektivische Darstellung oder eine Draufsicht von oben vorgesehen ist. Abhängig von dem Betriebszustand oder dem jeweiligen Bearbeitungsschritt kann eine Gesamtdarstellung der Tiefbaumaschine oder nur ein Darstellungsausschnitt oder eine Teildarstellung und oder eine teiltransparente Darstellung sinnvoll sein, insbesondere, wenn etwa bei der eigentlichen Bodenbearbeitung lediglich das Werkzeug dargestellt wird. Mit einer teiltransparenten Darstellung kann etwa eine Füllung eines glasartig gezeigten Bohreimers verdeutlichet werden, während die restlichen Maschinenkomponenten normal gezeigt sind.

Eine besonders einfache Ausführungsform der Erfindung wird nach einer Weiterbildung dadurch erzielt, dass die Steuereinheit ausgebildet ist, dass eine Änderung des Darstellungsmaßstabes und/oder der Darstellungsart durch Umschalten ohne Übergang erfolgt. Ein einfaches Umschalten führt zu einer klaren Struktur und bedarf keiner übermäßigen Rechenleistung.

Eine weitere Ausgestaltungsvariante der Erfindung besteht darin, dass die Steuereinheit ausgebildet ist, dass eine Änderung des Darstellungsmaßstabes und/oder der Darstellungsart dynamisch mit einem fließenden Übergang erfolgt. Insbesondere bei einem Übergang von einer Teildarstellung auf eine Gesamtdarstellung kann dies mit einem fließenden Zoom-Bildverlauf erfolgen. Auch eine Darstellung von einer Seitenansicht auf eine perspektivische Ansicht kann mit einem fließenden Übergang erfolgen, was zu einer besonders guten Anschaulichkeit von bestimmten Bearbeitungsschritten führen kann. Auch kann einem Maschinenbediener ein fließender Übergang, welcher ähnlich einem Kameraschwenk erfolgen kann, eine relevante Änderung im Verfahrensablauf und das Anstehen eines neuen Bearbeitungsschrittes besonders gut veranschaulicht werden.

Eine besonders gute Erhöhung der Aufmerksamkeit für den anstehenden Verfahrensablauf und/oder eine Änderung im Verfahrensablauf für den Maschinenbediener kann nach einer bevorzugten Ausführungsform der Erfindung dadurch erzielt werden, dass die Steuereinheit ausgebildet ist, zumindest einen Teil der Tiefbaumaschine zunächst in einem ersten Darstellungsmaßstab und/oder einer ersten Darstellungsperspektive und/oder einem ersten Darstellungsausschnitt und/oder einer ersten Teildarstellung und/oder eine Volldarstellung oder Transparenzdarstellung anzuzeigen und auf einen zweiten Darstellungsmaßstab und/oder eine zweite Darstellungsperspektive und/oder einen zweiten Darstellungsausschnitt und/oder eine zweite Teildarstellung und/oder eine Transparenzdarstellung beziehungsweise Volldarstellung gemäß einer vorgegebenen Programmsteuerung umzuschalten oder überzugehen, wenn eine bestimmte Lage oder Zustand des Tiefbauwerkzeuges und/oder mindestens einer Komponente der Tiefbaumaschine erreicht ist. Hierzu können entsprechende Sensoren an der Tiefbaumaschine angeordnet sein, mit welchen die Lage oder ein Zustand des Tiefbauwerkzeuges oder einer der Komponenten der Tiefbaumaschine erfasst werden können. Die Sensoren stehen dabei mit der Steuereinheit in Verbindung. Mit einer (Teil-) Transparenzdarstellung kann insbesondere ein Füllgrad eines Tiefbauwerkzeuges verdeutlicht werden.

Besonders vorteilhaft ist es nach einer Weiterbildung der Erfindung, dass die Steuereinheit ausgebildet ist, den Darstellungsausschnitt dynamisch so zu ändern, dass das Tiefbauwerkzeug stets mittig angezeigt ist, insbesondere wenn es einen zu bearbeitenden Boden erreicht. Insbesondere während des eigentlichen Bearbeitungsvorganges mit dem Tiefbauwerkzeug kann dieses mittig dargestellt sein. Im Sinne der Erfindung ist unter mittig nicht eine strenge Zentrierung auf einem Bildschirm zu verstehen, sondern eine Darstellung in einem mittleren Bereich des Bildschirms, jedenfalls nicht am Rand des Bildschirms. Neben einer mittigen Darstellung des Tiefbauwerkzeuges können abhängig vom Verfahrensablauf und von einzelnen Verfahrensschritten auch andere Komponenten der Tiefbaumaschine mittig dargestellt werden.

Eine besonders gute Anschaulichkeit kann nach einer Weiterbildung der Erfindung dadurch erzielt werden, dass die Steuereinheit ausgebildet ist, dass ab einer bestimmten Bearbeitungstiefe von einer Gesamtdarstellung der Tiefbaumaschine auf mindestes eine Teildarstellung übergegangen wird, bei welcher Teile der Tiefbaumaschine entfallen, insbesondere Teile eines Bohr- und/oder Führungsgestänges oder eines Tragseiles. Hierdurch kann das Augenmerk auf besondere Komponenten gelegt werden, welche für einen Bearbeitungsschritt von wesentlicher Bedeutung sind und besonderer Aufmerksamkeit des Maschinenbedieners bedürfen. Unwesentliche Komponenten brauchen dabei nicht dargestellt werden. Vorzugsweise kann bei dem Übergang von einer Gesamtdarstellung auf eine Teildarstellung auch der Darstellungsmaßstab geändert, insbesondere vergrößert, werden.

Es ist nach einer Weiterbildung der Erfindung bevorzugt, dass die Steuereinheit so ausgebildet ist, dass das Tiefbauwerkzeug in einem vergrößerten Darstellungsmaßstab angezeigt ist, wenn es in den Boden eindringt und/oder eine zu bearbeitende Sohle des Bodens erreicht oder kurz bevor die Sohle erreicht ist. Besonders die Interaktion des Tiefbauwerkzeuges mit dem zu bearbeitenden Boden wie z. B. ein Füllgrad eines Tiefbauwerkzeugs ist für die Effizienz des Verfahrensablaufes und der Bodenbearbeitung von maßgeblicher Bedeutung. Dies wird durch diese Art der Darstellung weiter verdeutlicht und die Aufmerksamkeit des Maschinenbedieners darauf gerichtet.

Eine besonders gute Darstellung kann nach einer Ausführungsvariante der Erfindung dadurch erzielt werden, dass die Steuereinheit derart ausgebildet ist, dass das Trägergerät in einem verkleinerten Darstellungsmaßstab relativ zu dem Tiefbauwerkzeug und/oder anderen Komponenten der Tiefbaumaschine angezeigt wird. So kann eine Gesamtdarstellung der Tiefbaumaschine erfolgen, wobei entsprechend ihrer Bedeutung für den jeweiligen Verfahrensschritt das Tiefbauwerkzeug und/oder andere Komponenten der Tiefbaumaschine mit unterschiedlichen Darstellungsmaßstäben und gegebenenfalls mit unterschiedlicher Realitätsnähe angezeigt werden.

Insbesondere nach Abschluss der eigentlichen Bodenbearbeitung oder eines Bodenbearbeitungsschrittes kann es nach einer Weiterbildung der Erfindung vorteilhaft sein, dass die Steuereinheit so ausgebildet ist, dass sich bei einem Ziehen des Tiefbauwerkzeuges aus dem Boden der Darstellungsmaßstab verkleinert. Der Darstellungsmaßstab kann sich insbesondere in Bezug auf das Tiefbauwerkzeug verkleinern, wobei vorzugsweise ein gleicher Darstellungsmaßstab für die Tiefbaumaschine insgesamt erreicht wird. Hierdurch kann der Maschinenbediener etwa ein besseres Gefühl für die Gesamttiefe einer Bohrung entwickeln.

Nach einer weiteren bevorzugten Ausführungsvariante der Erfindung ist es vorgesehen, dass die Steuereinheit ausgebildet ist, dass unmittelbar oder bei einem Verschwenken eines Oberwagens, welcher drehbar um eine vertikale Schwenkachse an einem Unterwagen des Trägergeräts gelagert ist, eine Änderung der Darstellungsperspektive von einer Seitenansicht zu einer Draufsicht auf die Tiefbaumaschine und/oder umgekehrt bewirkt wird. Hierdurch kann die Aufmerksamkeit des Maschinenbedieners nunmehr darauf gerichtet werden, dass ein Verschwenken des Oberwagens ansteht. Ein Darstellungsmodus kann durch eine Steuerbetätigung des Maschinenbedieners, durch eine Programmsteuerung selbst oder durch Sensordaten ausgelöst werden. Dabei kann die Tiefbaumaschine auch mit einer oder mehreren Kameras sowie anderen Sensoren, etwa Radar- oder Lidar/Ladar-Sensoren, ausgestattet sein, um eine Umgebung der Tiefbaumaschine zu erfassen, insbesondere auch mögliche Hindernisse. Die so erfasste Umgebung und eventuelle Hindernisse können in der Darstellung der Tiefbaumaschine in der Draufsicht berücksichtigt werden, so dass ein sicheres Bedienen der Tiefbaumaschine für den Maschinenbediener unterstützt wird.

Die Tiefbaumaschine ist grundsätzlich zum Durchführen einer Tiefbaumaßnahme, insbesondere zum Spezialtiefbau, also zu Gründungsarbeiten, ausgebildet. Besonders vorteilhaft ist es nach einer Ausführung der Erfindung, dass die Tiefbaumaschine als ein Bohrgerät, eine Schlitzwandfräse, eine Greifvorrichtung, eine Ramme, ein Rüttler, ein Greifbagger oder ein Seilbagger ausgebildet ist. Unter einem Seilbagger kann allgemein ein Mobilkran mit einem verschwenkbaren Auslegerarm verstanden werden, wobei an einem Tragseil des Auslegerarms nicht zwingend eine Greifvorrichtung angeordnet sein muss. Vielmehr kann ein Seilbagger oder Mobilkran etwa auch zur Bodenverdichtung unter Einsatz eines Fallgewichtes eingesetzt werden.

Nach einer Weiterbildung der Erfindung ist es vorteilhaft, dass eine Schalteinrichtung angeordnet ist, mit welcher eine automatische Änderung des Darstellungsmaßstabes und/oder der Darstellungsart durch die Steuereinheit aktiviert und deaktiviert werden kann. Die Schalteinrichtung kann von dem Maschinenbediener bedient werden, so dass dieser den gewünschten Darstellungsmodus aktivieren oder deaktivieren kann.

Das erfindungsgemäße Verfahren ist dadurch gekennzeichnet, dass bei bestimmten Lageänderungen des Tiefbauwerkzeuges und/oder von mindestens einer Komponente der Tiefbaumaschine durch die Steuereinheit automatisch ein Darstellungsmaßstab und/oder eine Darstellungsart der zumindest schematischen Darstellung der Anzeigeeinrichtung geändert wird.

Das erfindungsgemäße Verfahren kann insbesondere mit der zuvor beschriebenen erfindungsgemäßen Tiefbaumaschine und einer der angeführten Weiterbildungen hierzu durchgeführt werden. Es können dabei die zuvor beschriebenen Vorteile erzielt werden.

Die Erfindung wird nachfolgend anhand von bevorzugten Ausführungsbeispielen weiter erläutert, welche schematisch in den Zeichnungen dargestellt sind. In den Zeichnungen zeigen:
- Fig. 1: eine schematische Seitenansicht einer erfindungsgemäßen Tiefbaumaschine und
- Figuren 2a bis 2d: eine Abfolge von möglichen Darstellungen an einem Monitor.

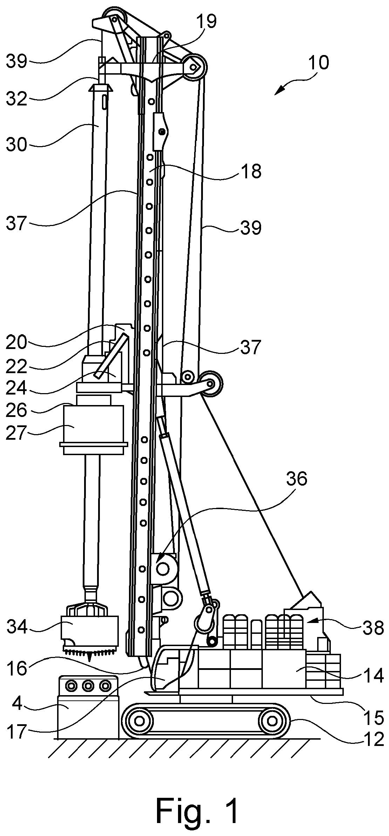

Eine erfindungsgemäße Tiefbaumaschine 10, welche beispielhaft als ein Bohrgerät gemäß Fig. 1 ausgebildet ist, weist einen vorzugsweise als Raupenfahrwerk ausgebildeten Unterwagen 12 und einen darauf drehbar gelagerten Oberwagen 14 auf. Der Unterwagen 12 und der Oberwagen 14 bilden ein Trägergerät 15. An dem Oberwagen 14 können in bekannter Weise die Antriebsaggregate und ein Bedienstand 17 für einen Maschinenbediener der Tiefbaumaschine 10 angeordnet sein. In dem Bedienstand 17 können eine Steuereinheit und eine Anzeigeeinrichtung, insbesondere mindestens ein Monitor, angeordnet sein.

An einer Vorderseite des Oberwagens 14 kann über eine Anlenkkinematik 16 mit Nackenzylindern ein im wesentlichen vertikaler Mast 18 mit einem oberen Mastkopf 19 verstellbar angebracht sein. Entlang einer Vorderseite des Mastes 18 kann ein Schlitten 20 verschiebbar geführt werden. Auf dem Schlitten 20 kann ein erster Bohrantrieb 22 vorgesehen, welcher einen Hydraulikmotor 24 aufweisen kann. Weiterhin kann an dem Schlitten 20 ein zweiter Antrieb 26 mit einer hülsenförmigen Drehverbindung 27 zum Herstellen einer drehfesten Verbindung zu einem Stützrohr 4 vorgesehen sein. Der zweite Antrieb 26 kann beispielsweise im Wesentlichen aus einer Getriebeverbindung zu dem ersten Bohrantrieb 22 mit dem Hydraulikmotor 24 bestehen, um so ein Drehmoment auf die Drehverbindung 27 und damit das Stützrohr 4 aufzubringen.

Der etwa hülsenförmige erste Bohrantrieb 22 kann beispielhaft von einem Bohrgestänge 30 durchdrungen werden, welches als ein Kellygestänge mit äußeren Mitnehmerleisten ausgebildet sein kann. Hierbei kann das Bohrgestänge 30 eine obere Aufhängung 32 aufweisen, mit welcher das Bohrgestänge 30 mit einem Hauptseil 39 verbunden ist. Das Hauptseil 39 kann über Umlenkrollen am Mastkopf 19 zu einer Hauptwinde 38 an der Oberseite des Oberwagens 14 geführt sein. Durch Betätigen der Hauptwinde 38 kann das Bohrgestänge 30 vertikal bewegt werden.

Der Schlitten 20 kann mit einem Vorschubseil 37 verbunden sein, welches oberhalb und unterhalb des Schlittens 20 entlang des Mastes 18 geführt und von einer Vorschubwinde 36 betätigt werden kann. Durch die Vorschubwinde 36 kann der Schlitten 20 entlang einer Führung des Mastes 18 nach oben oder unten bewegt werden.

An einer Unterseite des Bohrgestänges 30 ist ein Bohrwerkzeug als Tiefbauwerkzeug 34 zum Abtragen von Bodenmaterial angebracht. Das Tiefbauwerkzeug 34 ist in dem dargestellten Ausführungsbeispiel nach Fig. 1 als ein Bohreimer ausgeführt. Der Durchmesser des Bohrwerkzeuges ist dabei so ausgebildet, dass dieses in den inneren Hohlraum des Stützrohres 4 eingeführt werden kann.

Mit der Tiefbaumaschine 10 kann eine verrohrte Bohrung im Boden 1 erstellt werden. Zum Bilden eines Gründungselementes im Boden 1 kann in die Bohrung eine aushärtbare Masse eingeleitet werden, welche dann zum Gründungselement aushärtet. Das Stützrohr 4 kann in der Bohrung als Teil des Gründungselementes verbleiben oder vorzugsweise vor einem Aushärten aus dem Boden 1 gezogen werden.

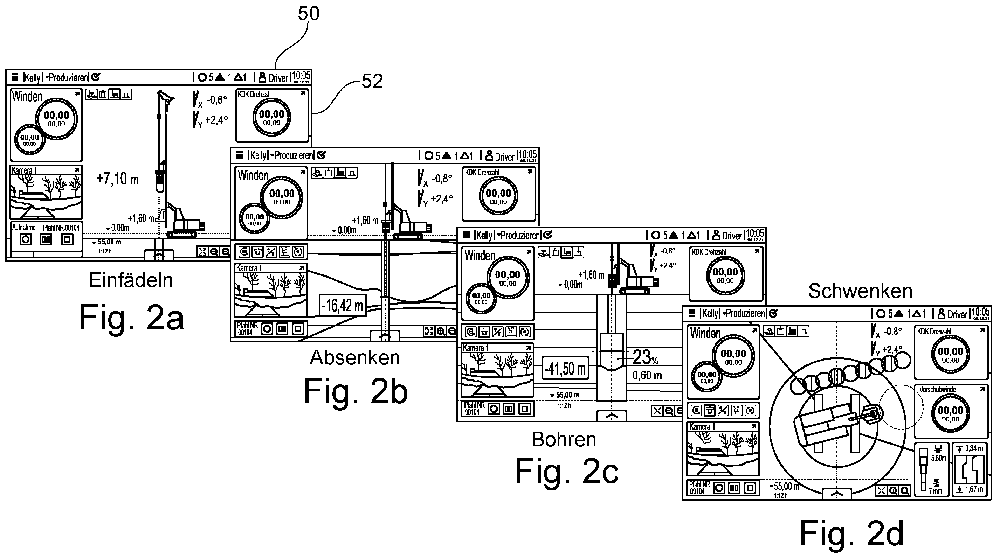

Zur Verdeutlichung der Erfindung ist in den Figuren 2a bis 2d eine schematische Abfolge von Darstellungen an einem Monitor 52 einer Anzeigeeinrichtung 50 gezeigt, wie sie insbesondere in der Tiefbaumaschine 10 nach Figur 1 eingesetzt werden kann.

Die Bildschirmdarstellung gemäß Fig. 2a auf einem Monitor 52, vorzugsweise in dem Bedienstand 17 der Tiefbaumaschine 10 nach Fig. 1, zeigt in einem mittleren Bereich schematisch die Tiefbaumaschine 10 in Seitenansicht. In diesem Betriebszustand befindet sich das Tiefbauwerkzeug 34 oberhalb eines bereits in den Boden 1 eingebrachten Stützrohres 4, wobei ein Bohreimer als beispielhaftes Tiefbauwerkzeug 34 in das Stützrohr 4 einzufädeln ist. In dieser Darstellung nach Fig. 2a ist die Tiefbaumaschine 10 schematisch und stark vereinfacht in einer Seitenansicht mit einem einheitlichen Maßstab vom Trägergerät 15 bis zum oberen Ende des Mastes dargestellt. Zusätzlich ist zumindest ein Teil des Stützrohres 4 in dem Boden 1 gezeigt. In Seitenbereichen dieser schematischen Darstellung der Tiefbaumaschine 10 können weitere wesentliche Angaben und Betriebsparameter und auch ein Kamerabild angezeigt werden, welche insgesamt für den Bedienvorgang des Einfädelns wesentlich sind.

Nach dem Einfädeln des Tiefbauwerkzeuges 34 in das Stützrohr 4 wird auf dem Monitor 52 eine Abbildung entsprechend Fig. 2b dargestellt. In dieser Abbildung ist ein wesentlicher Teil des Bohrloches mit dem Stützrohr 4 in dem Boden 1 dargestellt, während ein oberer Endbereich des Mastes 18 der Tiefbaumaschine 10 nicht mehr gezeigt ist. Bei der Abbildung nach der Fig. 2b ist das Tiefbauwerkzeug 34 in einem Mittenbereich des Monitors 52 als beispielhafte Anzeigeeinrichtung 50 zu sehen. Neben dem Tiefbauwerkzeug 34 kann eine Tiefenangabe in einem separaten Feld zu dem Tiefbauwerkzeug 34 erfolgen, wobei in dem Ausführungsbeispiel nach Fig. 2b als aktuelle Tiefe 16,42 Meter unterhalb der Bodenoberfläche angegeben ist. Bei diesem Vorgang des Absenkens gemäß Fig. 2b kann das Tiefbauwerkzeug 34 mit einem gleichen Darstellungsmaßstab oder einem leicht vergrößerten Darstellungsmaßstab gegenüber der Fig. 2a abgebildet sein.

Unmittelbar vor Erreichen einer Sohle in dem Bohrloch im Boden 1 durch das Tiefbauwerkzeug 34 kann die Darstellungsform entsprechend Fig. 2c geändert werden. Hierbei wird das Tiefbauwerkzeug 34 gegenüber der restlichen Tiefbaumaschine 10 mit einem größeren Maßstab dargestellt, wobei die Gesamtdarstellung nicht einheitlich und maßstabsgerecht ist. Unmittelbar neben dem im Wesentlichen mittig dargestellten Tiefbauwerkzeug 34 können die aktuelle Tiefe des Werkzeuges, die Soll- oder Zieltiefe und in diesem Beispiel ein Füllgrad des Bohreimers als Tiefbauwerkzeug 34 als wesentliche Daten unmittelbar zu dem Tiefbauwerkzeug 34 angezeigt werden.

Nach dem Bohrschritt und einem Ziehen des gefüllten Tiefbauwerkzeuges 34 aus dem Bohrloch und dem Stützrohr 4 im Boden 1 ist der Oberwagen 14 der Tiefbaumaschine 10 zu einer Entleerposition zu verschwenken. Dabei kann eine Perspektive entsprechend der Fig. 2d von der Seitenansicht nach den Figuren 2a bis 2c zu einer Draufsicht entsprechend Fig. 2d geändert werden. Abermals kann dabei ein Darstellungsmaßstab der Tiefbaumaschine 10 geändert werden. In dieser Figur können auch das bearbeitete Bohrloch oder die bereits bearbeiteten Bohrlöcher abgebildet sein.

## Patentansprüche

1. Tiefbaumaschine, insbesondere Bohrgerät, mit
- einem mobilen Trägergerät (15),
- einem Mast (18) oder Auslegerarm, welcher an dem Trägergerät (15) angeordnet ist,
- einem Tiefbauwerkzeug (34), welches zum Ausführen einer Tiefbaumaßnahme an dem Mast (18) beziehungsweise dem Auslegerarm verstellbar angeordnet ist,
- mindestens einer Anzeigeeinrichtung (50), insbesondere einem Monitor (52), und
- einer Steuereinheit, welche ausgebildet ist, Komponenten der Tiefbaumaschine (10) zu steuern und Betriebszustände zu erfassen und abhängig von erfassten Betriebsdaten eine zumindest schematische Darstellung zumindest eines Teils der Tiefbaumaschine (10) zu erzeugen und mit der mindestens einen Anzeigeeinrichtung (50) anzuzeigen, wobei eine Lageänderung des Tiefbauwerkzeuges (34) und/oder mindestens einer Komponente der Tiefbaumaschine (10) in der zumindest schematischen Darstellung der Anzeigeeinrichtung (50) angezeigt wird,
**dadurch gekennzeichnet,**
- **dass** die Steuereinheit ausgebildet ist, bei bestimmten Lageänderungen des Tiefbauwerkzeuges (34) und/oder von mindestens einer Komponente der Tiefbaumaschine (10) automatisch einen Darstellungsmaßstab und/oder eine Darstellungsart der zumindest einen schematischen Darstellung der Anzeigeeinrichtung (50) zu ändern.

2. Tiefbaumaschine nach Anspruch 1,
**dadurch gekennzeichnet,**
**dass** die Darstellungsart eine Darstellungsperspektive und/oder einen Darstellungsausschnitt und/oder Teildarstellungen und/oder teiltransparente Darstellung umfasst.

3. Tiefbaumaschine nach Anspruch 1 oder 2,
**dadurch gekennzeichnet,**
**dass** die Steuereinheit ausgebildet ist, dass eine Änderung des Darstellungsmaßstabes und/oder der Darstellungsart durch Umschalten ohne Übergang erfolgt.

4. Tiefbaumaschine nach einem der Ansprüche 1 bis 3,
**dadurch gekennzeichnet,**
**dass** die Steuereinheit ausgebildet ist, dass eine Änderung des Darstellungsmaßstabes und/oder der Darstellungsart dynamisch mit einem fließenden Übergang erfolgt.

5. Tiefbaumaschine nach einem der Ansprüche 1 bis 4,
**dadurch gekennzeichnet,**
**dass** die Steuereinheit ausgebildet ist, zumindest einen Teil der Tiefbaumaschine (10) zunächst in einem ersten Darstellungsmaßstab und/oder einer ersten Darstellungsperspektive und/oder einem ersten Darstellungsausschnitt und/oder einer ersten Teildarstellung anzuzeigen und auf einen zweiten Darstellungsmaßstab und/oder eine zweite Darstellungsperspektive und/oder einen zweiten Darstellungsausschnitt und/oder eine zweite Teildarstellung gemäß einer vorgegebenen Programmsteuerung umzuschalten oder überzugehen, wenn eine bestimmte Lage oder Zustand des Tiefbauwerkzeuges (34) und/oder mindestens einer Komponente der Tiefbaumaschine (10) erreicht ist.

6. Tiefbaumaschine nach einem der Ansprüche 1 bis 5,
**dadurch gekennzeichnet,**
**dass** die Steuereinheit ausgebildet ist, den Darstellungsausschnitt dynamisch so zu ändern, dass das Tiefbauwerkzeug (34) stets mittig angezeigt ist, insbesondere wenn das Tiefbauwerkzeug (34) einen zu bearbeitenden Boden (1) erreicht.

7. Tiefbaumaschine nach einem der Ansprüche 1 bis 6,
**dadurch gekennzeichnet,**
**dass** die Steuereinheit ausgebildet ist, dass ab einer bestimmten Bearbeitungstiefe von einer Gesamtdarstellung der Tiefbaumaschine (10) auf mindestens eine Teildarstellung übergegangen wird, bei welcher Teile der Tiefbaumaschine (10) entfallen, insbesondere Teile eines Bohr- und/oder Führungsgestänges (30) oder eines Tragseiles.

8. Tiefbaumaschine nach einem der Ansprüche 1 bis 7,
**dadurch gekennzeichnet,**
**dass** die Steuereinheit ausgebildet ist, dass das Tiefbauwerkzeug (34) in einem vergrößerten Darstellungsmaßstab angezeigt ist, wenn das Tiefbauwerkzeug in den Boden (1) eindringt und/oder eine zu bearbeitende Sohle eines Lochs im Boden (1) erreicht oder kurz bevor die Sohle erreicht ist.

9. Tiefbaumaschine nach einem der Ansprüche 1 bis 8,
**dadurch gekennzeichnet,**
**dass** die Steuereinheit ausgebildet ist, dass das Trägergerät in einem verkleinerten Darstellungsmaßstab relativ zu dem Tiefbauwerkzeug und/oder anderen Komponenten der Tiefbaumaschine angezeigt wird.

10. Tiefbaumaschine nach einem der Ansprüche 1 bis 9,
**dadurch gekennzeichnet,**
**dass** die Steuereinheit ausgebildet ist, dass sich bei einem Ziehen des Tiefbauwerkzeuges (34) aus dem Boden (1) der Darstellungsmaßstab verkleinert.

11. Tiefbaumaschine nach einem der Ansprüche 1 bis 10,
**dadurch gekennzeichnet,**
**dass** die Steuereinheit ausgebildet ist, dass unmittelbar vor oder bei einem Verschwenken eines Oberwagens (14), welcher drehbar um eine vertikale Schwenkachse an einem Unterwagen (12) des Trägergeräts (15) gelagert ist, eine Änderung der Darstellungsperspektive von einer Seitenansicht zu einer Draufsicht auf die Tiefbaumaschine (10) und/oder umgekehrt bewirkt wird.

12. Tiefbaumaschine nach einem der Ansprüche 1 bis 11,
**dadurch gekennzeichnet,**
**dass** die Tiefbaumaschine (10) als ein Bohrgerät, eine Schlitzwandfräse, eine Greifvorrichtung, eine Ramme, ein Rüttler, ein Greifbagger oder ein Seilbagger ausgebildet ist.

13. Tiefbaumaschine nach einem der Ansprüche 1 bis 12,
**dadurch gekennzeichnet,**
**dass** eine Schalteinrichtung angeordnet ist, mit welcher eine automatische Änderung des Darstellungsmaßstabes und/oder der Darstellungsart durch die Steuereinheit aktiviert und deaktiviert werden kann.

14. Verfahren zum Betreiben einer Tiefbaumaschine (10), insbesondere nach einem der Ansprüche 1 bis 13, mit
- einem mobilen Trägergerät (15),
- einem Mast (18) oder Auslegerarm, welcher an dem Trägergerät (15) angeordnet ist,
- einem Tiefbauwerkzeug (34), welches zum Ausführen einer Tiefbaumaßnahme an dem Mast (18) beziehungsweise dem Auslegerarm verstellbar angeordnet ist,
- mindestens einer Anzeigeeinrichtung (50), insbesondere einem Monitor (52), und
- einer Steuereinheit,
- wobei durch die Steuereinheit Komponenten der Tiefbaumaschine (10) gesteuert und Betriebszustände erfasst werden und
- wobei abhängig von erfassten Betriebszuständen eine zumindest schematische Darstellung zumindest eines Teils der Tiefbaumaschine (10) durch die Steuereinheit erzeugt und auf der mindestens einen Anzeigeeinrichtung (50) angezeigt wird, wobei eine Lageänderung des Tiefbauwerkzeuges (36) und/oder mindestens einer Komponente der Tiefbaumaschine (10) in der zumindest schematischen Darstellung der Anzeigeeinrichtung (50) angezeigt wird,
**dadurch gekennzeichnet,**
- **dass** unmittelbar vor oder bei bestimmten Lageänderungen des Tiefbauwerkzeuges (34) und/oder von mindestens einer Komponente der Tiefbaumaschine (10) durch die Steuereinheit automatisch ein Darstellungsmaßstab und/oder eine Darstellungsart der zumindest schematischen Darstellung der Anzeigeeinrichtung (50) geändert wird.

## Claims

1. A civil engineering machine, in particular drilling rig, having
- a mobile carrier device (15),
- a mast (18) or jib arm which is arranged on the carrier device (15),
- a civil engineering tool (34) which is arranged adjustably on the mast (18) or the jib arm in order to carry out a civil engineering operation,
- at least one display device (50), in particular a monitor (52), and
- a control unit which is configured to control components of the civil engineering machine (10) and to detect operating states and, depending on detected operating data, to generate an at least schematic representation of at least one part of the civil engineering machine (10) and to display it by means of the at least one display device (50), wherein a change in position of the civil engineering tool (34) and/or at least one component of the civil engineering machine (10) is displayed in the at least schematic representation of the display device (50),
**characterised in that**
- the control unit is configured to automatically change a display scale and/or a type of representation of the at least one schematic representation of the display device (50) in the event of certain changes in position of the civil engineering tool (34) and/or of at least one component of the civil engineering machine (10).

2. The civil engineering machine according to claim 1,
**characterised in that**
the type of representation comprises a display perspective and/or a display detail and/or partial displays and/or a partially transparent display.

3. The civil engineering machine according to claim 1 or 2,
**characterised in that**
the control unit is configured that a change in the display scale and/or the type of representation takes place by switching without a transition.

4. The civil engineering machine according to any one of claims 1 to 3,
**characterised in that**
the control unit is configured that a change in the display scale and/or the type of representation takes place dynamically with a smooth transition.

5. The civil engineering machine according to any one of claims 1 to 4,
**characterised in that**
the control unit is configured to display at least a part of the civil engineering machine (10) initially in a first display scale and/or a first display perspective and/or a first display detail and/or a first partial display and to switch or change over to a second display scale and/or a second display perspective and/or a second display detail and/or a second partial display in accordance with a predetermined program control when a specific position or state of the civil engineering tool (34) and/or at least one component of the civil engineering machine (10) is reached.

6. The civil engineering machine according to any one of claims 1 to 5,
**characterised in that**
the control unit is configured to dynamically change the display detail in such a way that the civil engineering tool (34) is always displayed in the centre, in particular when the civil engineering tool (34) reaches ground (1) to be worked on.

7. The civil engineering machine according to any one of claims 1 to 6,
**characterised in that**
the control unit is configured that, from a certain working depth, a transition is made from an overall display of the civil engineering machine (10) to at least one partial display, in which parts of the civil engineering machine (10) are omitted, in particular parts of a drill pipe and/or guide rod (30) or a support cable.

8. The civil engineering machine according to any one of claims 1 to 7,
**characterised in that**
the control unit is configured that the civil engineering tool (34) is displayed on an enlarged display scale when the civil engineering tool (34) penetrates the ground (1) and/or reaches a base of a hole in the ground (1) to be worked or shortly before the base is reached.

9. The civil engineering machine according to any one of claims 1 to 8,
**characterised in that**
the control unit is configured that the base carrier is displayed on a reduced display scale relative to the civil engineering tool and/or other components of the civil engineering machine.

10. The civil engineering machine according to any one of claims 1 to 9,
**characterised in that**
the control unit is configured that the display scale is reduced when the civil engineering tool (34) is pulled out of the ground (1).

11. The civil engineering machine according to any one of claims 1 to 10,
**characterised in that**
the control unit is configured that a change in the display perspective from a side view to a plan view of the civil engineering machine (10) and/or vice versa is effected immediately before or when a superstructure (14), which is mounted rotatably about a vertical pivot axis on an undercarriage (12) of the carrier device (15), is pivoted.

12. The civil engineering machine according to any one of claims 1 to 11,
**characterised in that**
the civil engineering machine (10) is configured as a drilling rig, a trench cutter, a gripping device, a pile driver, a vibrator, a grab excavator or a cable excavator.

13. The civil engineering machine according to any one of claims 1 to 12,
**characterised in that**
a switching device is arranged, with which an automatic change of the display scale and/or the type of representation can be activated and deactivated by the control unit.

14. A method for operating a civil engineering machine (10), in particular according to any one of claims 1 to 13, having
- a mobile carrier device (15),
- a mast (18) or jib arm which is arranged on the carrier device (15),
- a civil engineering tool (34) which is arranged adjustably on the mast (18) or the jib arm in order to carry out a civil engineering operation,
- at least one display device (50), in particular a monitor (52), and
- a control unit,
- wherein components of the civil engineering machine (10) are controlled and operating states are identified by the control unit, and
- wherein, depending on detected operating states, a at least schematic representation of at least one part of the civil engineering machine (10) is generated by the control unit and is displayed on the at least one display device (50), wherein a change in position of the civil engineering tool (36) and/or of at least one component of the civil engineering machine (10) is displayed in the at least schematic representation of the display device (50),
**characterised in that**
- a display scale and/or a type of representation of the at least schematic representation of the display device (50) is changed automatically by the control unit immediately before or in the event of certain changes in position of the civil engineering tool (34) and/or of at least one component of the civil engineering machine (10).

## Revendications

1. Engin de génie civil, en particulier appareil de forage, comprenant
- un engin porteur mobile (15),
- un mât (18) ou bras de flèche, lequel est disposé sur l'engin porteur (15),
- un outil de travaux de génie civil (34), lequel est disposé de manière réglable sur le mât (18), respectivement sur le bras de flèche, pour exécuter une opération de travaux de génie civil,
- au moins un dispositif d'affichage (50), en particulier un moniteur (52), et
- une unité de commande, laquelle est conçue pour commander des composants de l'engin de génie civil (10) et détecter des états de fonctionnement et, en fonction de données de fonctionnement détectées, générer une représentation au moins schématique d'au moins une partie de l'engin de génie civil (10) et l'afficher au moyen d'au moins un dispositif d'affichage (50), une modification de position de l'outil de travaux de génie civil (34) et/ou d'au moins un composant de l'engin de génie civil (10) étant affichée dans la représentation au moins schématique du dispositif d'affichage (50),
**caractérisée en ce que**
- l'unité de commande est conçue pour modifier automatiquement, lors de certaines modifications de position de l'outil de travaux de génie civil (34) et/ou d'au moins un composant de l'engin de génie civil (10), une échelle de représentation et/ou un mode de représentation de l'au moins une représentation schématique du dispositif d'affichage (50).

2. Engin de génie civil selon la revendication 1,
**caractérisée en ce que**
le mode de représentation comprend une perspective de représentation et/ou une section de représentation et/ou des représentations partielles et/ou une représentation partiellement transparente.

3. Engin de génie civil selon la revendication 1 ou 2,
**caractérisée en ce que**
l'unité de commande est conçue de telle sorte qu'une modification de l'échelle de représentation et/ou du mode de représentation s'effectue par commutation sans transition.

4. Engin de génie civil selon l'une des revendications 1 à 3,
**caractérisée en ce que**
l'unité de commande est conçue de telle sorte qu'une modification de l'échelle de représentation et/ou du mode de représentation s'effectue dynamiquement avec une transition fluide.

5. Engin de génie civil selon l'une des revendications 1 à 4,
**caractérisée en ce que**
l'unité de commande est conçue pour afficher au moins une partie de l'engin de génie civil (10) d'abord selon une première échelle de représentation et/ou une première perspective de représentation et/ou une première section de représentation et/ou une première représentation partielle, et pour commuter vers ou passer à une deuxième échelle de représentation et/ou une deuxième perspective de représentation et/ou une deuxième section de représentation et/ou une deuxième représentation partielle conformément à une commande de programme prédéfinie, lorsqu'une certaine position ou un certain état de l'outil de travaux de génie civil (34) et/ou d'au moins un composant de l'engin de génie civil (10) est atteint.

6. Engin de génie civil selon l'une des revendications 1 à 5,
**caractérisée en ce que**
l'unité de commande est conçue pour modifier dynamiquement la section de représentation de telle sorte que l'outil de travaux de génie civil (34) soit toujours affiché au centre, en particulier lorsque l'outil de travaux de génie civil (34) atteint un sol (1) à traiter.

7. Engin de génie civil selon l'une des revendications 1 à 6,
**caractérisée en ce que**
l'unité de commande est conçue de telle sorte qu'à partir d'une certaine profondeur de traitement, l'on passe d'une représentation globale de l'engin de génie civil (10) à au moins une représentation partielle, dans laquelle des parties de l'engin de génie civil (10) sont omises, en particulier des parties d'un train de tiges de forage et/ou de guidage (30) ou d'un câble porteur.

8. Engin de génie civil selon l'une des revendications 1 à 7,
**caractérisée en ce que**
l'unité de commande est conçue de telle sorte que l'outil de travaux de génie civil (34) soit affiché selon une échelle de représentation agrandie lorsque l'outil de travaux de génie civil pénètre dans le sol (1) et/ou atteint un fond à traiter d'un trou dans le sol (1) ou peu avant que le fond ne soit atteint.

9. Engin de génie civil selon l'une des revendications 1 à 8,
**caractérisée en ce que**
l'unité de commande est conçue de telle sorte que l'engin porteur soit affiché selon une échelle de représentation réduite par rapport à l'outil de travaux de génie civil et/ou à d'autres composants de l'engin de génie civil.

10. Engin de génie civil selon l'une des revendications 1 à 9,
**caractérisée en ce que**
l'unité de commande est conçue de telle sorte que, lors d'une extraction de l'outil de travaux de génie civil (34) hors du sol (1), l'échelle de représentation diminue.

11. Engin de génie civil selon l'une des revendications 1 à 10,
**caractérisée en ce que**
l'unité de commande est conçue de telle sorte qu'immédiatement avant ou lors d'un pivotement d'une superstructure tournante (14), laquelle est montée de manière rotative autour d'un axe de pivotement vertical sur un châssis inférieur (12) de l'engin porteur (15), une modification de la perspective de représentation d'une vue latérale à une vue de dessus de l'engin de génie civil (10) et/ou inversement soit provoquée.

12. Engin de génie civil selon l'une des revendications 1 à 11,
**caractérisée en ce que**
l'engin de génie civil (10) est réalisée sous la forme d'un appareil de forage, d'une fraise pour paroi moulée, d'un dispositif de préhension, d'un mouton de battage, d'un vibrateur, d'une pelle à benne preneuse ou d'une pelle à câbles.

13. Engin de génie civil selon l'une des revendications 1 à 12,
**caractérisée en ce que**
un dispositif de commutation est disposé, au moyen duquel une modification automatique de l'échelle de représentation et/ou du mode de représentation par l'unité de commande peut être activée et désactivée.

14. Procédé de fonctionnement d'une engin de génie civil (10), en particulier selon l'une des revendications 1 à 13, comprenant
- un engin porteur mobile (15),
- un mât (18) ou bras de flèche, lequel est disposé sur l'engin porteur (15),
- un outil de travaux de génie civil (34), lequel est disposé de manière réglable sur le mât (18), respectivement sur le bras de flèche, pour exécuter une opération de travaux de génie civil,
- au moins un dispositif d'affichage (50), en particulier un moniteur (52), et
- une unité de commande,
- des composants de l'engin de génie civil (10) étant commandés et des états de fonctionnement étant détectés par l'unité de commande, et
- une représentation au moins schématique d'au moins une partie de l'engin de génie civil (10) étant générée par l'unité de commande en fonction d'états de fonctionnement détectés et affichée sur l'au moins un dispositif d'affichage (50), une modification de position de l'outil de travaux de génie civil (36) et/ou d'au moins un composant de l'engin de génie civil (10) étant affichée dans la représentation au moins schématique du dispositif d'affichage (50),
**caractérisé en ce que**
- immédiatement avant ou lors de certaines modifications de position de l'outil de travaux de génie civil (34) et/ou d'au moins un composant de l'engin de génie civil (10), une échelle de représentation et/ou un mode de représentation de la représentation au moins schématique du dispositif d'affichage (50) est modifié automatiquement par l'unité de commande.
